# EUROPÄISCHE PATENTANMELDUNG

(11) **EP 0 662 420 A2**
(43) Veröffentlichungstag der Anmeldung: **12.07.1995**
(21) Anmeldenummer: 95100252.6
(22) Anmeldetag: 10.01.1995
(51) Int. Cl.: B62K 25/02

(54) **Vorrichtung zum Verbinden zweier Bauteile eines Fahrrades**

(30) Priorität: 10.01.1994 DE 9400306 U
(71) Anmelder: DIAMANT FAHRRADWERKE GMBH, D-09117 Chemnitz (DE)
(72) Erfinder: Müller, Hartwig, Dr.-Ing., D-09126 Chemnitz (DE)
(74) Vertreter: Grünecker, Kinkeldey, Stockmair & Schwanhäusser Anwaltssozietät

(57) **Zusammenfassung**

Es wird eine Vorrichtung zum Verbinden zweier Bauteile (2, 3) eines Fahrrades, insbesondere zum Befestigen eines Laufrades am Rahmen beschrieben, die universell einsetzbar und trotzdem leicht lösbar ist. Die Vorrichtung enthält einen zweiteiligen, Gewindebolzen (4a) und Mutter (4b) umfassenden Schraubverbinder (4) sowie einen Spannexzenter (6), der eine sich an einem ersten Bauteil (3, 2) abstützende Führungshülse (7) und einen mit Hilfe eines Handhebels (12) im Inneren der Führungshülse (7) verschiebbaren Exzenterkopf (8) aufweist. Dabei ist eines der Teile (4a, 4b) des Schraubverbinders (4) am Spannexzenter (6) und das andere Teil (4b, 4a) des Schraubverbinders (4) am zweiten Bauteil (2, 3) befestigt.

## Beschreibung

Die Erfindung bezieht sich auf eine Vorrichtung zum Verbinden zweier Bauteile eines Fahrrades und insbesondere auf eine Vorrichtung zum Befestigen eines Laufrades am Rahmen des Fahrrades.

Die Laufräder von Fahrrädern müssen einerseits sehr fest im Rahmen sitzen um Unfälle zu verhüten, andererseits jedoch relativ einfach lösabar sein, um Reparaturarbeiten am Schlauch oder am Mantel zu erleichtern. Da bei Reparaturarbeiten nicht immer das geeignete Werkzeug verfügbar ist, sollten die Befestigungsvorrichtungen darüber hinaus zumindest nicht unbedingt ein Spezialwerkzeug erfordern, sondern allein per Hand oder mit einem gerade verfügbaren Gerät gelöst werden können. Zum Befestigen von Laufrädern am Rahmen eines Fahrrades werden beispielsweise Schnellspannschrauben mit einem Spannexzenter eingesetzt, die einen Gewindebolzen enthalten, der durch eine Öffnung in der Nabe des Laufrades und die angrenzenden Befestigungsöffnungen im Rahmen hindurchgesteckt werden kann. Der Gewindebolzen steht beidseitig über die Nabe und den Rahmen vor und ist an einem seiner freien Enden mit einem Gewinde versehen, auf das eine handbetätigte Flügel- oder Rändelmutter aufgeschraubt werden kann. Die andere Seite des Gewindebolzens ist fest mit einem Kopf verbunden, der axial gleitbeweglich in einer Führungshülse aufgenommen ist. Durch den Kopf erstreckt sich ein Exzenter, der von einem Handhebel derart verdreht werden kann, daß sich der Kopf und mit ihm der Gewindebolzen in Axialrichtung im Inneren der Führungshülse verschiebt. Die Führungshülse und die gegenüberliegende Rändelmutter stützen sich beidseitig der Nabe am Rahmen ab. Zum Montieren des Laufrades wird der Exzenter gelöst und der Gewindebolzen durch die Aufnahmeöffnungen am Rahmen und durch die Öffnung in der Nabe des Laufrades gesteckt. Dann wird die Rändelmutter so weit festgedreht, bis ein merklicher Widerstand auftritt. Dann wird der Exzenter derart verdreht, daß der Gewindebolzen in Richtung auf die mit dem Exzenterkopf versehene Seite des Laufrades angezogen wird, so daß die Gewindegänge zwischen Mutter und Gewindebolzen in einen festen Eingriff miteinander gezogen werden und der Rahmen zwischen der Mutter und der Führungshülse eingespannt wird. Eine derartige Spannschraube ist jedoch nur dort einsetzbar, wo Platz für eine Öffnung zum Durchstecken des Gewindebolzens vorhanden ist. Dieser Platz fehlt beispielsweise bei fünf- oder siebengängigen Nabenschaltungen.

Der Erfindung liegt somit die Aufgabe zugrunde, eine Vorrichtung zum Verbinden zweier Bauteile eines Fahrrades zu schaffen, die universell einsetzbar und trotzdem leicht lösbar ist.

Die Aufgabe wird durch die im Anspruch 1 angegebenen Merkmale gelöst.

Durch die erfindungsgemäße getrennte Anordnung der Teile (Mutter und und Gewindebolzen) des Schraubverbinders an einem der zu verbindenden Bauteile einerseits und am Spannexzenter andererseits, kann die Vorrichtung auch dort eingesetzt werden, wo kein Platz für eine Durchgangsöffnung für den Gewindebolzen der bekannten Schnellspannschrauben vorhanden ist, bzw. die Anordnung einer solchen Öffnung aus konstruktiven oder festigkeitsbedingten Gründen nicht zweckmäßig wäre.

Vorteilhafte Weiterbildungen der Erfindung sind den Unteransprüchen zu entnehmen.

Die Ansprüche 2 und 3 beschreiben eine zweckmäßige Verteilung der Teile des Schraubverbinders.

Anspruch 4 beschreibt eine Befestigungsvorrichtung, die beispielsweise zusätzlich zum Spannexzenter an einem zweiten Befestigungspunkt zweier Bauteile eines Fahrrades eingesetzt werden kann. Die Befestigungsvorrichtung ist ebenfalls universell einsetzbar und trotzdem leicht lösbar.

Vorteilhafte Weiterbildungen dieser Vorrichtung sind den Unteransprüchen 5 bis 12 zu entnehmen.

Ausführungsbeispiele der Erfindung werden nachfolgend an- hand der Zeichnungen näher erläutert. Es zeigen:
- Fig. 1: zwei Teile einer ersten Befestigungsvorrichtung in schematischer Darstellung,
- Fig. 2: die Draufsicht auf ein Teil einer zweiten Befestigungsvorrichtung, und
- Fig. 3: die Seitenansicht der Fig. 2 in teilweise geschnittener Darstellung.

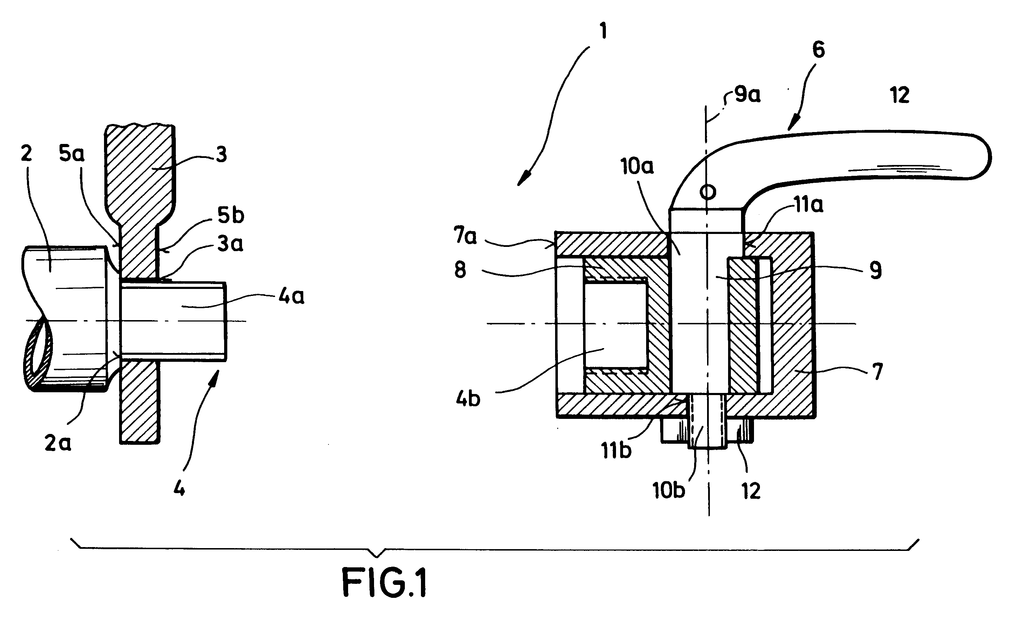

Aus Fig. 1 ist eine erfindungsgemäße Befestigungsvorrichtung 1 ersichtlich, die zur Montage eines nur durch seine Nabe oder Achse 2 dargestellten Laufrades in der Gabel eines Fahrradrahmens dient, von der lediglich ein Teil einer Gabelstrebe 3 gezeigt ist. Die Befestigungsvorrichtung 1 enthält einen Schraubverbinder 4, der aus einem mit Außengewinde versehenen Teil, dem Gewindebolzen 4a, und einem mit Innengewinde versehenen Teil, der Mutter 4b, besteht. Der Gewindebolzen 4a ist fest mit der Nabe oder Achse 2 des Laufrades verbunden, erstreckt sich in deren Mittellinie und ist in einer der üblichen, einseitig offenen Lagerausnehmungen 3a der Gabelstrebe 3 aufgenommen. An beiden vertikalen Seiten der Gabelstrebe 3, an der Ausmündung der Lagerausnehmung 3a, sind Anschlagflächen 5a und 5b vorgesehen. Die Anschlagfläche 5a kommt mit einer korrespondierenden Anschlagfläche 2a an der Achse 2 in Kontakt. Der Gewindebolzen 4a ist so lang, daß er sich durch die Lagerausnehmung 3a und so weit über die gegenüberliegende Anschlagfläche 5b hinauserstreckt, daß eine sichere Schraubbefestigung möglich ist.

Die Mutter 4b des Schraubverbinders 4 ist mit einem Spannexzenter 6 verbunden. Der Spannexzenter 6 weist eine einseitig offene, zylindrische Führungshülse 7 mit einer stirnseitigen Anschlagfläche 7a auf, die mit der Anschlagfläche 5b in Eingriff kommen kann. Im Inneren der Führungshülse 7 ist axial gleitbeweglich ein Exzenterkopf 8 untergebracht. In einer Grundlochbohrung im Exzenterkopf 8, die in Richtung der offenen Seite der Führungshülse 7 offen ist, ist das der Mutter 4b zugeordnete Innengewinde eingeschnitten. In einem Querschlitz des Exzenterkopfes 8 ist ein Exzenter 9 angeordnet, der um eine sich senkrecht zur Achse der zylindrischen Führungshülse 7 erstreckende Achse 9a verdrehbar ist. Der Exzenter 9 ist in Axialrichtung beidseitig mit um die Drehachse 9a zentrierten Drehzapfen 10a und 10b versehen. Der Drehzapfen 10a läuft in einer korrespondierenden Ausnehmung 11a, die sich durch die zylindrische Seitenwand der Führungshülse 7 erstreckt. Der Drehzapfen 10a hat einen Radius, der mindestens so groß ist, wie der größte Abstand der Umfangsfläche des Exzenters 9 von der Drehachse 9a. Auf diese Weise kann der Spannexzenter 6 einfach montiert werden und es steht eine relativ große Abstützfläche zwischen dem Exzenter 9 und der Führungshülse 7 zur Verfügung. Der Drehzapfen 10b kann etwas kleiner sein, erstreckt sich jedoch ebenfalls durch eine Ausnehmung 11b in der zylindrischen Seitenwand der Führungshülse 7 und ist außerhalb der Führungshülse 7 durch einen Splint 12 oder dgl. gegen axiale Verschiebung gesichert, wobei der Splint jedoch eine ungehinderte Drehbewegung des Exzenters 9 und der Drehzapfen 10a und 10b um die Drehachse 9 gestattet. Diese Drehbewegung erfolgt über einen Handhebel 12, der mit dem größeren Drehzapfen 10a verbunden ist und ergonomisch zweckmäßig ausgestaltet ist, so daß auch ungeübte Personen eine ausreichende Spannkraft aufbringen können.

Zum Montieren des Laufrades am Fahrradrahmen wird das Laufrad zunächst in die Gabelstrebe 3 so eingesetzt, daß der Gewindebolzen 4a vollständig in der Lagerausnehmung 3a der Gabelstrebe 3 sitzt. Dann wird, ggfs. nach Einlegen einer nicht gezeichneten Schraubenfeder zwischen die Anlageflächen 2a und 5a und/oder 5b und 7a, der Spannexzenter 6 mit der Mutter 4b so weit auf den Gewindebolzen 4a aufgeschraubt, bis die Anlagefläche 2a der Achse 2 an der Anlagefläche 5a der Gabelstrebe 3 und die Anlagefläche 7a der Führungshülse 7 an der Anlagefläche 5b der Gabelstrebe 3 anliegen. Anschließend wird der Handhebel 12 aus der in Fig. 1 dargestellten, nicht-spannenden Lage beispielsweise um ca. 90° in eine Stellung verschwenkt, in der der Spannhebel 12 parallal zur Laufebene des Laufrades verläuft. Dadurch verdreht sich der Exzenter, bis sein Umfang mit dem größeren Abstand zur Drehachse 9a in Fig. 1 rechts von der Drehachse 9a liegt, und zieht somit den Exzenterkopf 8 in Fig. 1 nach rechts. Dadurch wird einerseits die Anlagefläche 2a fester an die Anlagefläche 5a und andererseits die Anlagefläche 7a fester an die Anlagefläche 5a gepreßt, so daß das Laufrad festsitzt.

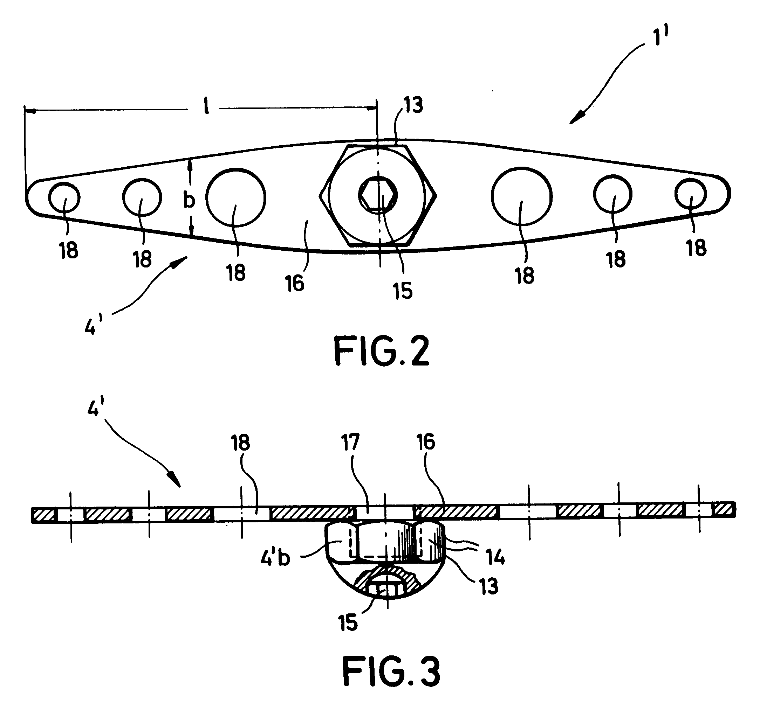

Die in Fig. 1 nicht gezeichnete, gegenüberliegende Seite der Achse 2 kann ebenfalls mit einem dem Gewindebolzen 4a komplentären Gewindebolzen versehen sein, auf den die Befestigungsvorrichtung 1' der Fig. 2 und 3 aufschraubbar ist. Die Befestigungsvorrichtung 1' weist ebenfalls als zweites Teil eines Schraubverbinders 4' eine mit Innengewinde versehene Mutter 4'b auf, die in der Art einer Hutmutter ausgebildet ist, d.h. auch die Stirnfläche des zugehörigen Gewindebolzens überdeckt. Die Mutter 4'b weist Angriffsflächen für die unterschiedlichsten Werkzeuge und Betätigungsmittel auf. Die Mutter 4'b enthält einen zylindrischen Bereich 13, der mit äußeren Angriffsflächen 14 für ein Schraubwerkzeug, beispielsweise einen Gabel- oder Knochenschlüssel oder eine Zange, versehen ist. Der zylindrische Bereich 13 ist bevorzugt eine handelsübliche Mutter mit Außensechskant.

Eine Stirnfläche des zylindrischen Bereichs 13 enthält innere Angriffsflächen 15 für einen Imbusschlüssel. Die inneren Angriffsflächen 15 sind als Innensechskant ausgebildet. Im bevorzugten Ausführungsbeispiel ist der Innensechskant 15 Teil einer Innensechskant-Mutter, die auf die Stirnseite einer Außensechskant-Mutter 13 derart aufgeschweißt ist, daß die Gewindeöffnung der Mutter 13 an dieser Seite abgedeckt wird.

An der dem Innensechskant 15 gegenüberliegenden Seite des zylindrischen Bereichs 13 ist ein zweiseitiger Hebelarm 16 in Form eines flachen Metallstreifens symmetrisch zur Achse der Gewindeöffnung der Mutter 4'b derart befestigt, daß er in Richtung seiner Breite b parallel zur Laufebene des Laufrades verläuft. Der zweiseitige Hebelarm 16 enthält eine mit der Gewindeöffnung der Mutter 4'b fluchtende Gewindeöffnung 17 und steht an diametral gegenüberliegenden Seiten der Mutter 4'b symmetrisch vor. Die Länge 1 jedes der Hebelarme ist für jeden Einsatzzweck so bemessen, daß zwar eine optimale Drehmomentverstärkung erzielt wird, die Hebelarme jedoch in der Gesamtkonstruktion nicht störend in Erscheinung treten. Die von der Gewindeöffnung 17 beidseitig nach außen abnehmende Breite b der Hebelarme berechnet sich nach ergonomischen Gesichtspunkten, da die Hebelarme 16 zur Handbetätigung ausgelegt sind. Trotzdem enthält jeder der Hebelarme Durchbrechungen 18 in unterschiedlichen Abständen zur Mittellinie der Mutter 4'b, in die geeignete, stabförmige Werkzeuge eingesteckt werden können.

In Abwandlung der beschriebenen und gezeichneten Ausführungsbeispiele kann beispielsweise der Gewindebolzen des Schraubverbinders nach Fig. 1 am Spannexzenter und die Mutter an der Achse angeordnet sein. Es ist weiterhin möglich, die Mutter an der Führungshülse des Spannexzenters und die Anlagefläche am Exzenterkopf vorzusehen, wenn statt eines Gewindebolzens mit vollem Querschnitt ein rohrförmiger Gewindebolzen verwendet und die Anlagefläche in dessen Innerem vorgesehen wird. Die erfindungsgemäßen Befestigungsvorrichtungen eignen sich weiterhin nicht nur zur Montage von Laufrädern sondern können an allen geeigneten Verbindungsstellen, beispielsweise für ein Klappfahrrad oder dgl., verwendet werden. Zweipunkt-Befestigungen, wie für Laufräder erforderlich, können sowohl mit zwei Befestigungsvorrichtungen mit Spannexzenter als auch mit zwei Befestigungsvorrichtungen mit Handhebel ausgestattet werden. Die Befestigungsvorrichtung mit Handhebel kann darüber hinaus anders ausgebildete Angriffsflächen für Schraubwerkzeuge aufweisen. Anstelle der aufgeschweißten Innensechskant-Mutter kann der Innensechskant in eine Außensechskant-Hutmutter integriert werden. Statt des zweiseitigen Handhebels kann ein einseitiger Handhebel verwendet werden.

## Patentansprüche

1. Vorrichtung zum Verbinden zweier Bauteile (2, 3) eines Fahrrades, insbesondere zum Befestigen eines Laufrades am Rahmen, mit einem zweiteiligen, Gewindebolzen (4a) und Mutter (4b) umfassenden Schraubverbinder (4) sowie einem Spannexzenter (6), der eine sich an einem ersten Bauteil (3, 2) abstützende Führungshülse (7) und einen mit Hilfe eines Handhebels (12) im Inneren der Führungshülse (7) verschiebbaren Exzenterkopf (8) aufweist, wobei eines der Teile (4a, 4b) des Schraubverbinders (4) am Spannexzenter (6) und das andere Teil (4b, 4a) des Schraubverbinders (4) am zweiten Bauteil (2, 3) befestigt ist.

2. Vorrichtung nach Anspruch 1, **dadurch gekennzeichnet,** daß der Gewindebolzen (4a) des Schraubverbinders (4) am zweiten Bauteil (2) befestigt ist.

3. Vorrichtung nach Anspruch 1 oder 2, **dadurch gekennzeichnet,** daß die Mutter (4b) am Exzenterkopf (8) des Spannexzenters (6) befestigt ist.

4. Vorrichtung, insbesondere nach einem der Ansprüche 1 bis 3, **gekennzeichnet durch** einen zweiteiligen, Mutter (4'b) und Gewindebolzen umfassenden Schraubverbinder (4') zum Verbinden zweier Bauteile eines Fahrrades, insbesondere zum Befestigen eines Laufrades am Rahmen, wobei die Mutter (4'b) wenigstens eine Angriffsfläche (14, 15) für ein Schraubwerkzeug und einen das aufbringbare Drehmoment verstärkenden, als Handgriff ausgebildeten Hebelarm (16) aufweist.

5. Vorrichtung nach Anspruch 4, **gekennzeichnet durch** eine innere Angriffsfläche (15).

6. Vorrichtung nach Anspruch 4 oder 5, **gekennzeichnet durch** einen Innensechskant (15).

7. Vorrichtung nach einem der Ansprüche 4 bis 6, **gekennzeichnet durch** eine äußere Angriffsfläche (14).

8. Vorrichtung nach einem der Ansprüche 4 bis 7, **gekennzeichnet durch** einen Außensechskant (14).

9. Vorrichtung nach einem der Ansprüche 4 bis 8, **gekennzeichnet durch** einen zweiseitigen Hebelarm (16).

10. Vorrichtung nach einem der Ansprüche 4 bis 9, **dadurch gekennzeichnet,** daß der Hebelarm (16) eine Angriffsfläche (18) für ein Werkzeug aufweist.

11. Vorrichtung nach Anspruch 10, **dadurch gekennzeichnet,** daß die Angriffsfläche die Innenfläche einer Durchbrechung (18) ist.

12. Vorrichtung nach Anspruch 11, **dadurch gekennzeichnet,** daß eine Mehrzahl von Durchbrechungen (18) in unterschiedlichen Abständen zur Gewindeachse der Mutter (4'b) vorgesehen sind.
